# EUROPÄISCHE PATENTANMELDUNG

(11) **EP 3 547 246 A1**
(43) Veröffentlichungstag der Anmeldung: **02.10.2019**
(21) Anmeldenummer: 18164481.6
(22) Anmeldetag: 28.03.2018
(51) Int. Cl.: G06Q 50/04, G06Q 10/08

(54) **STRECKENVERFOLGUNG ZUM VERFOLGEN UND/ODER ÜBERWACHEN TRANSPORTIERTER PRODUKTE**

(71) Anmelder: MULTIVAC Sepp Haggenmüller SE & Co. KG, 87787 Wolfertschwenden (DE)
(72) Erfinder: BUCHENBERG, Wolfgang, 87466 Oy-Mittelberg (DE)
(74) Vertreter: Grünecker Patent- und Rechtsanwälte PartG mbB

(57) **Zusammenfassung**

Streckenverfolgung (110) zum Verfolgen und/oder Überwachen einer Vielzahl von durch eine Behandlungsstrecke (100) transportierter Produkte (130, 131, 132) in der Lebensmittelindustrie oder der Verpackungsindustrie, mit wenigstens einem Sensor (141, 142) zum Messen eines produktspezifischen Wertes für jedes Produkt (130, 131, 132) und einer Anzeigeeinrichtung (201), die den produktspezifischen Wert des Produktes (130, 131, 132) in dem Produkt zugeordneter Weise anzeigen kann, dadurch gekennzeichnet, dass die Anzeigeeinrichtung (201) eine Virtual-Reality Brille (201) ist, die ausgebildet ist, den produktspezifischen Wert einer Ansicht oder einer Darstellung der Produkte überlagert darzustellen.

## Beschreibung

Die vorliegende Erfindung betrifft eine Streckenverfolgung zum Verfolgen und/oder Überwachen einer Vielzahl von durch eine Behandlungsstrecke transportierter Produkte in der Lebensmittelindustrie oder der Verpackungsindustrie gemäß Oberbegriff des Anspruchs 1 und ein Verfahren zum Verfolgen und/oder Überwachen einer Vielzahl von durch eine Behandlungsstrecke transportierter Produkte in der Lebensmittelindustrie oder der Verpackungsindustrie mit Hilfe einer Streckenverfolgung gemäß Oberbegriff des Anspruchs 8. Die Erfindung betrifft ferner eine Transportstrecke zum Transportieren von Produkten in der Lebensmittelindustrie oder der Verpackungsindustrie gemäß Anspruch 14.

### Stand der Technik

In der Lebensmittelindustrie oder Verpackungsindustrie (beispielsweise für Tabletten oder Farbpatronen für Drucker oder ähnliches) werden üblicherweise Behandlungsstrecken für Produkte, wie beispielsweise Wurstwaren oder andere Fleischwaren, Tabletten oder ähnliches verwendet. In diesen Behandlungsstrecken werden unter anderem die Lebensmittel mittels Schnittvorrichtungen zugeschnitten und in Verpackungen aus Plastik oder Ähnlichem mit Hilfe von Einlegestationen eingelegt und anschließend in einer Siegeleinrichtung versiegelt, indem Kunststofffolie zum Abdecken der Verpackung aufgebracht und mit dieser luftdicht verbunden wird. Während der Behandlung der Lebensmittel oder allgemeiner der Produkte aus den zu verpackenden Lebensmittel und den Verpackungen fallen gegebenenfalls für Bediener von entlang der Behandlungsstrecke angeordneten Maschinen relevante Informationen an. So ist es bisher üblich, dass Bediener abhängig vom Gewicht einer Verpackung mit bereits eingelegtem Lebensmittel zum Beispiel eine zusätzliche Scheibe des Lebensmittels in das Produkt hineinpacken oder eine solche Scheibe daraus entfernen, wenn das tatsächliche Gewicht des Produktes (Wurst und Verpackung) vom Soll-Gewicht abweicht.

Hierzu ist es üblich, die Produkte in einem Wiegebereich durch Anzeigen des Gewichts jedes einzelnen Produktes auf einer Waage oder durch Anzeigen des Gewichts auf dem Produkt mit Hilfe einer Laserprojektion eine eindeutige Zuordnung von Gewicht und Produkt zu schaffen und es dem Bediener so zu ermöglichen, zu erkennen, in welche der Verpackungen eine zusätzliche Scheibe eingelegt werden muss, aus welchen Verpackungen eine Scheibe oder mehrere herausgenommen werden müssen oder welche Verpackungen bereits das gewünschte Gewicht aufweisen und daher keiner weiteren Bearbeitung durch den Bediener in diesem Bereich bedürfen.

Dies erfordert jedoch, dass der Bediener sich stets auf die üblicherweise zu den Produkten beabstandete Anzeige der Wiegevorrichtung konzentrieren muss oder die Laserprojektion auf dem Produkt und hier insbesondere auf dem eingelegten Lebensmittel erkennen können muss. Dies stellt sehr spezielle Anforderungen zum einen an die ausgewählte Farbe der Laserprojektion und zum anderen spezielle Anforderungen an die Anordnung der Anzeige der Wiegeeinrichtung, da der Bediener zwischen den Produkten und der Anzeige hin und her schauen muss. Hierbei kann es zu Verwechslungen dahingehend kommen, für welche Verpackung bzw. bei welchem Produkt nun ein Eingriff durch Entfernen oder Hinzugeben von Scheiben notwendig ist.

Auch bei anderen durch einen Bediener durchgeführten Aufgaben kann es aus ähnlichen Gründen zu Verwechslungen und daher Fehlern im Umgang mit den Lebensmitteln kommen.

### Aufgabe

Ausgehend vom bekannten Stand der Technik besteht die zur lösende technische Aufgabe darin, die Interaktion eines Bedieners mit Produkten zu vereinfachen.

### Lösung

Diese Aufgabe wird durch die Streckenverfolgung zum Verfolgen und/oder Überwachen einer Vielzahl von durch eine Behandlungsstrecke transportierter Produkte in der Lebensmittelindustrie oder der Verpackungsindustrie gemäß Anspruch 1 und das Verfahren zum Verfolgen und/oder Überwachen einer Vielzahl von durch eine Behandlungsstrecke transportierter Produkte in der Lebensmittelindustrie oder der Verpackungsindustrie gemäß Anspruch 8, sowie durch die Transportstrecke zum Transportieren von Produkten in der Lebensmittelindustrie oder der Verpackungsindustrie gemäß Anspruch 14 gelöst. Vorteilhafte Weiterbildungen der Erfindung sind in den Unteransprüchen erfasst.

Die erfindungsgemäße Streckenverfolgung zum Verfolgen und/oder Überwachen einer Vielzahl von durch eine Behandlungsstrecke transportierter Produkte in der Lebensmittelindustrie oder der Verpackungsindustrie umfasst wenigstens einen Sensor zum Messen eines produktspezifischen Wertes für jedes Produkt und eine Anzeigeeinrichtung, die den produktspezifischen Wert des Produktes in einer dem Produkt zugeordneten Weise anzeigen kann, und ist dadurch gekennzeichnet, dass die Anzeigeeinrichtung eine Virtual-Reality-Brille ist, die ausgebildet ist, den produktspezifischen Wert einer Ansicht oder einer Darstellung der Produkte überlagert darzustellen.

Unter einem Produkt ist hier im Bereich der Lebensmittelindustrie entweder das Lebensmittel selbst oder das Lebensmittel in einer Verpackung (noch geöffnet oder bereits verschlossen) oder auch nur die Verpackung zu verstehen. Darunter fallen beispielsweise in einer Verpackung angeordnete Wurstscheiben. Auch in eine Verpackung verbrachte Stücke Wurst willkürlicher Form können hierunter verstanden werden. Ebenso kommen Produkte wie Käsescheiben in Betracht.

Ein produktspezifischer Wert kann ein numerischer Wert oder eine nicht numerische Zustandsangabe sein. Zu den numerischen Werten zählen beispielsweise Angaben zum Gewicht oder zur Größe oder zum Füllstand einer Verpackung ggf. mit darin befindlichem Lebensmittel, wohingegen ein nicht numerischer Zustand des Produktes beispielsweise Angaben über die Haltbarkeit (abgelaufenes Produkt, noch haltbares Produkt oder Ähnliches) enthält. Produktspezifisch ist der Wert genau dann, wenn er ein isoliertes Produkt unabhängig von den übrigen Produkten kennzeichnet. Dies bedeutet beispielsweise, dass das Gewicht eines Produkts nur das Gewicht des entsprechenden Produkts unabhängig von dem Gewicht der übrigen Produkte angibt. Beispielsweise kann der produktspezifische Wert "Gewicht" das Gewicht einer Verpackung mit den darin zum Zeitpunkt der Messung des Gewichts angeordneten Wurstscheiben angeben. Dies wird für jedes einzelne Produkt (also jede einzelne Verpackung mit der darin eingelegten Wurst) bestimmt und ist daher spezifisch für jedes gemessene Produkt. Der Sensor ist in geeigneter Weise ausgebildet, den produktspezifischen Wert zu messen oder zu ermitteln, also beispielsweise festzustellen, wie hoch das Gewicht des Produktes ist oder ob das Produkt bereits abgelaufen ist.

Die Virtual-Reality-Brille ist grundsätzlich als eine von dem Bediener tragbare Einrichtung zu verstehen, die eine Darstellung der den Bediener umgebenen Wirklichkeit in Echtzeit ermöglicht und zusätzlich nicht in der realen Umgebung enthaltene Objekte (hier im Besonderen die produktspezifischen Werte) anzeigt. Die Darstellung der produktspezifischen Werte in einer der Ansicht oder der Darstellung der Produkte überlagerten Weise bedeutet, dass die produktspezifischen Werte zusammen mit der Ansicht oder der Darstellung der Produkte in Form einer gemischten Realität oder auch Mixed Reality bzw. Augmented Reality angezeigt werden.

Der Begriff der Darstellung umfasst alle Ausführungsformen, die eine Anzeige des Produkts und/oder der Umgebung in der Virtual-Reality Brille durch Verwendung optischer Sensoren erreichen. Hierunter fallen Ausführungsformen der Virtual-Reality Brille in Form von Head-Mounted-Displays, die üblicherweise einen blickdichten Schirm mit einem dem Bediener zugewandten Display zum Anzeigen der durch Kameras aufgenommenen Umgebung umfassen.

Die Ansicht ist als solche Ausführungsform aufzufassen, die dem Bediener das unmittelbare Wahrnehmen des Produkts und/oder der Umgebung durch die Virtual-Reality Brille hindurch ohne Verwendung von optischen Sensoren ermöglicht. Hierunter fallen insbesondere Ausführungsformen, bei denen die Virtual-Reality Brille als Datenbrille mit durchsichtigen oder transparenten Displays analog zu Brillengläsern ausgestattet ist.

Während im Folgenden häufig lediglich auf die "Darstellung" Bezug genommen wird, ist davon stets auch die "Ansicht" in der eben beschriebenen Bedeutung gemeint.

Durch Verwendung der so ausgebildeten Virtual-Reality-Brille als Teil der Streckenverfolgung wird dem Bediener während des Betrachtens des entsprechenden Produktes die dazugehörige produktspezifische Information dargestellt, so dass er nicht darauf angewiesen ist, auf ein anderswo positioniertes Display zu sehen, um die produktspezifische Information zu erhalten. Dies kann insbesondere bei schnellen Abläufen die Interaktion mit Produkt, beispielsweise das Auflegen zusätzlicher Wurstscheiben oder das Entfernen von Wurstscheiben aus einzelnen Verpackungen abhängig vom Gewicht vereinfachen.

In einer Ausführungsform ist vorgesehen, dass die Virtual-Reality-Brille als Head-Mounted Display oder als Datenbrille ausgebildet ist. Da Head-Mounted Displays über undurchsichtige Bildschirme verfügen, sind die Möglichkeiten der zusätzlichen Darstellung von Informationen hier vielfältiger, da die Darstellung des Produktes beispielsweise über Bildaufnahmen einer Kamera außerhalb der Head-Mounted Displays erfolgt und so eine Kombination von aufgenommenen Bilddaten mit zusätzlichen Informationen wie den produktspezifischen Werten auf vielfältige Weise erfolgen kann. Dem gegenüber bieten Datenbrillen den Vorteil, dass sie dem Bediener im Prinzip eine ungehinderte Betrachtung der Produkte ermöglichen und lediglich die produktspezifischen Werte zusätzlich dargestellt werden. Die Datenbrillen sind darüber hinaus leichter und daher gegebenenfalls komfortabler zu tragen.

Es kann vorgesehen sein, dass der Sensor eine Wiegezelle zum Wiegen eines Produktes und/oder einen Detektor zum Detektieren einer Markierung wie einen Zeitstempel oder eine Chargenidentifikation, und/oder einen Detektor zum Erkennen eines auszusortierenden Produktes umfasst. Der Detektor kann jede Form von Einrichtung sein, die entweder die Markierung oder das auszusortierende Produkt erkennen kann. Im Falle der Markierung kann es sich bei dem Detektor um einen Magnetdetektor oder Strichcodedetektor oder Ähnliches handeln. Falls der Detektor zum Erkennen eines auszusortierenden Produkts vorgesehen ist, kann neben den eben beschriebenen Sensoren beispielsweise auch eine Reihe von chemischen Sensoren zum Einsatz kommen, die den Zustand (Haltbarkeit, Kontamination oder Ähnliches) des Produktes bestimmen können. Auch Kombinationen der Sensoren und Detektoren sind denkbar, so dass dem Bediener eine möglichst umfangreiche Palette an Informationen zur Verfügung gestellt werden kann, was ein Eingreifen in die Behandlung der Produkte effektiver gestalten kann.

Weiterhin kann vorgesehen sein, dass die Streckenverfolgung ausgebildet ist, den produktspezifischen Wert für ein Produkt anzuzeigen, falls das Produkt sich im Sichtfeld eines die Virtual-Reality-Brille tragenden Bedieners befindet. Diese Form der Darstellung der produktspezifischen Werte nur dann, wenn auch das entsprechende Produkt für den Bediener sichtbar ist, erlaubt eine Handhabung der Virtual-Reality-Brille in für den Bediener gewohnter Weise, da ihm keine Informationen zu Produkten angezeigt werden, die sich beispielsweise hinter ihm oder zumindest außerhalb seines Sichtfeldes befinden. Verwirrungen des Bedieners und eine damit einhergehende mögliche falsche Behandlung einzelner Produkte können so vermieden werden.

In einer weiteren Ausführungsform ist die Streckenverfolgung ausgebildet, den produktspezifischen Wert mit dem Produkt mitbewegbar darzustellen, falls sich das Produkt relativ zur Virtual-Reality-Brille bewegt. Dies schließt nicht nur Bewegungen des Produktes beispielsweise in einer Transportstrecke, sondern auch eine Bewegung des Bedieners, insbesondere seines Kopfes relativ zum Produkt mit ein, so dass unter der Bewegung des Produktes relativ zur Virtual-Reality-Brille jegliche Veränderung der relativen Lage von Virtual-Reality-Brille und Produkt zueinander zu verstehen ist. Das Mitbewegen der produktspezifischen Information bedeutet, dass die relative Lage von produktspezifischem Wert zum dazugehörigen Produkt sich bei dem Mitbewegen bevorzugt nicht ändert und dementsprechend die Zuordnung des produktspezifischen Wertes zu dem Produkt erhalten bleibt. Dem Bediener wird es damit noch mehr vereinfacht, den produktspezifischen Wert dem dazugehörigen Produkt zuzuordnen, was Fehler beim Behandeln der Produkte weiter reduzieren kann.

Die Streckenverfolgung kann darüber hinaus eine Steuereinheit umfassen, die mit dem wenigstens einen Sensor und der Virtual-Reality-Brille zum Datenaustausch verbunden ist und von dem Sensor gemessene, produktspezifische Werte empfangen und an die Virtual-Reality-Brille zur Darstellung übermitteln kann. Die Steuereinheit kann als Computer in üblicher Form oder als Steuereinheit einer Maschine ausgebildet sein und die Verbindung mit der Virtual-Reality-Brille einerseits und dem Sensor andererseits zum Datenaustausch kann in Form physischer Leitungen (Kabel) aber auch drahtlos erfolgen. Ferner kann diese Verbindung wenigstens unidirektional, bevorzugt bidirektional ausgebildet sein, so dass zumindest vorgesehen ist, dass die Sensoren der Steuereinheit die gemessenen, produktspezifischen Werte übermitteln können und die Steuereinheit diese gemessenen, produktspezifischen Werte oder davon abgeleitete Größen der Virtual-Reality-Brille zur Darstellung übermitteln kann. Ein Datenaustausch in die entsprechende andere Richtung (von Datenbrille zu Steuereinheit oder von Steuereinheit zu Sensor) ist nicht zwingend erforderlich, kann jedoch vorgesehen sein.

Von den produktspezifischen Werten abgeleitete Größen sind Größen, die sich aus den produktspezifischen Werten beispielsweise durch Anwendung bestimmter mathematischer Transformationen ergeben können. Falls die Virtual-Reality-Brille von einem Bediener verwendet wird, der z.B. Wurstscheiben abhängig vom Gewicht in Verpackungen einlegt oder aus diesen entfernt, kann vorgesehen sein, dass nicht das Gewicht der einzelnen Verpackung, sondern (beispielsweise in Form einer vorzeichenbehafteten Zahl) die Menge einzulegender oder zu entfernender Scheiben anstelle des Gewichts angezeigt wird. Bei der Menge zuzuführender oder zu entfernender Scheiben handelt es sich um eine von dem Gewicht des Produkts abgeleitete Größe. Mit dieser Ausführungsform kann ein möglichst effektiver Transfer der von den Sensoren gemessenen Werte an die Virtual-Reality-Brille gewährleistet werden. Weiterhin kann die dafür nötige Prozessorleistung außerhalb der Virtual-Reality-Brille realisiert werden, was ihr Gesamtgewicht reduzieren kann.

Weiterhin kann vorgesehen sein, dass die Virtual-Reality-Brille mit einer Positionsbestimmungseinrichtung zum Bestimmen der Position und/oder der Blickrichtung der Virtual-Reality-Brille relativ zu wenigstens einem Produkt verbunden ist oder diese umfasst. Die Positionsbestimmungseinrichtung ist bevorzugt wenigstens so ausgebildet, dass sie die Position oder relative Ausrichtung bezüglich eines Referenzpunktes, nicht notwendig des Produktes, bestimmen kann, aber wenigstens eine Positionsbestimmung der Virtual-Reality-Brille in einem dreidimensionalen Koordinatensystem erlaubt. Auf diese Weise kann die relative Bewegung von Produkt und Virtual-Reality-Brille zueinander zuverlässig bestimmt werden und basierend darauf beispielsweise die Darstellung der produktspezifischen Werte mit Hilfe der Virtual-Reality-Brille abhängig von der Blickrichtung eines Trägers der Virtual-Reality-Brille eingestellt werden, was die Wahrnehmung des Trägers bzw. Bedieners der Virtual-Reality-Brille gerade bei der Interaktion mit dem Produkt vereinfacht.

Das erfindungsgemäße Verfahren zum Verfolgen und/oder Überwachen einer Vielzahl von durch eine Behandlungsstrecke transportierter Behälter in der Lebensmittelindustrie mit Hilfe einer Streckenverfolgung umfassend wenigstens einen Sensor, der einen produktspezifischen Wert für jedes Produkt, das in der Behandlungsstrecke transportiert und/oder behandelt wird, misst, und eine Anzeigeeinrichtung, die den produktspezifischen Wert des Produktes in dem Produkt zugeordneter Weise anzeigt, ist dadurch gekennzeichnet, dass die Anzeigeeinrichtung eine Virtual-Reality-Brille ist oder aufweist, die den produktspezifischen Wert einer Ansicht oder einer Darstellung der Produkte überlagert darstellt, beispielsweise in Form einer Augmented Reality oder Mixed Reality. Mit diesem Verfahren kann sich ein Bediener, der die Virtual-Reality-Brille verwendet, auf das Produkt konzentrieren und die Behandlung (beispielsweise das Hinzufügen oder Entfernen von Wurstscheiben aus einer Verpackung) durchführen, während ihm die ganze Zeit die produktspezifischen Informationen dem Produkt zugeordnet in seinem Sichtfeld angezeigt werden, was insbesondere die Gefahr von Verwechslungen beim Betrachten eines weit entfernten Displays reduziert.

Es kann vorgesehen sein, dass die Virtual-Reality-Brille als Head-Mounted Display ausgebildet ist, das eine Kamera zum Aufnehmen des Sichtfeldes, das der Bediener, der das Head-Mounted Display trägt, ohne das Head-Mounted Display wahrnehmen würde, umfasst, und das aufgenommene Sichtfeld in Echtzeit darstellt, wobei dem aufgenommenen Sichtfeld der produktspezifische Wert wenigstens eines sich im Sichtfeld befindenden Produktes zugeordnet und überlagert dargestellt wird. Die Kamera oder zwei Kameras können beispielsweise auf der von den Augen des Bedieners wegweisenden Seite der Virtual-Reality-Brille angeordnet sein und dementsprechend dasselbe Sichtfeld wahrnehmen, das der Bediener ohne Virtual-Reality-Brille wahrnehmen würde. Dies erlaubt eine für den Bediener möglichst einfach zu handhabende Darstellung der Umgebung.

Alternativ kann vorgesehen sein, dass die Virtual-Reality-Brille als Datenbrille mit durchsichtigem Display ausgebildet ist und ein die Datenbrille tragender Bediener durch die Datenbrille hindurch ein Sichtfeld wahrnimmt, wobei der produktspezifische Wert wenigstens eines sich im Sichtfeld befindenden Produktes dem Produkt zugeordnet und dem Sichtfeld überlagert im durchsichtigen Display dargestellt wird. Datenbrillen bieten ein geringes Gewicht und damit erhöhten Tragekomfort, was die Verwendung auch über längere Arbeitszeit hinweg möglich macht. Durch die überlagerte Darstellung der produktspezifischen Werte wird dem Bediener trotzdem die notwendige Information zur Verfügung gestellt.

In einer Ausführungsform ist vorgesehen, dass die Streckenverfolgung die Darstellung der Virtual-Reality-Brille so steuert, dass sich ein dargestellter, produktspezifischer Wert des Produktes mit dem sich relativ zur Virtual-Reality-Brille bewegten Produkt mitbewegt dargestellt wird. Dies beinhaltet bevorzugt, dass sich die für den Bediener wahrnehmbare räumliche Relation zwischen dem dargestellten produktspezifischen Wert und dem Produkt nicht ändert, selbst wenn sich das Produkt innerhalb des von der Virtual-Reality-Brille erfassten Sichtfeldes bewegt. Selbst wenn der Bediener also beispielsweise den Betrachtungswinkel des Produktes ändert, wird der produktspezifische Wert in derselben Art und Weise dargestellt, wie unter dem ursprünglichen Blickwinkel. Dem Bediener wird damit die Zuordnung des produktspezifischen Wertes zum entsprechenden Produkt vereinfacht.

Weiterhin kann vorgesehen sein, dass der Sensor eine Wiegezelle zum Wiegen eines Produktes umfasst und der produktspezifische Wert ein für das Gewicht des Produktes charakteristischer Wert ist und/oder dass der Sensor einen Detektor zum Detektieren einer Markierung, wie einem Zeitstempel oder eine Chargenidentifikation umfasst und der produktspezifische Wert die detektierte Markierung ist und/oder dass der Sensor einen Detektor zum Erkennen eines auszusortierenden Produktes umfasst und der produktspezifische Wert eine visuelle Angabe darüber ist, dass das Produkt aussortiert werden soll oder dass das Produkt nicht aussortiert werden soll. Während die Verwendung einer Wiegezelle üblicherweise einen numerischen Wert liefert (beispielsweise das Gewicht), kann das Detektieren einer Markierung oder das Erkennen eines auszusortierenden Produktes in einem nicht numerischen Wert (Aussortieren ja/nein) resultieren, der dem Bediener ebenfalls angezeigt werden kann. Die Handhabung der Produkte kann für den Bediener auf diese Weise einfacher gestaltet werden.

Gemäß der Erfindung wird ferner eine Transportstrecke zum Transportieren von Produkten in der Lebensmittelindustrie oder der Verpackungsindustrie vorgesehen, wobei die Transportstrecke wenigstens eine Transporteinrichtung zum Transportieren der Produkte und eine Streckenverfolgung gemäß einer der vorangegangenen Ausführungsformen umfasst.

Die in den obigen und noch folgenden Ausführungsformen beschriebene Streckenverfolgung und das entsprechende Verfahren können auch als Teil einer Behandlungsanlage in der Lebensmittelindustrie oder der Verpackungsindustrie vorgesehen sein. Die Streckenverfolgung kann dann der Behandlungsanlage zugeordnet sein oder als Teil dieser vorgesehen sein.

In der Verpackungsindustrie handelt es sich bei den Produkten dann üblicherweise um ein Medikament (Tablette oder ähnliches) oder ein Bauteil oder um die Kombination einer Verpackung mit dem darin befindlichen Bauteil oder Medikament.

### Kurze Beschreibung der Figuren

- Fig. 1: zeigt eine Behandlungsstrecke für Produkte in der Lebensmittelindustrie gemäß einer Ausführungsform.
- Fig. 2: zeigt die Darstellung produktspezifischer Werte in den Produkten zugeordneter Weise mit Hilfe der Virtual-Reality-Brille gemäß einer Ausführungsform.
- Fig. 3a und 3b: zeigen Ausführungsformen der Virtual-Reality-Brille.
- Fig. 4: zeigt eine Ausführungsform der Änderung der Darstellung bei Bewegung von Produkt- und Virtual-Reality-Brille relativ zueinander.

### Ausführliche Beschreibung

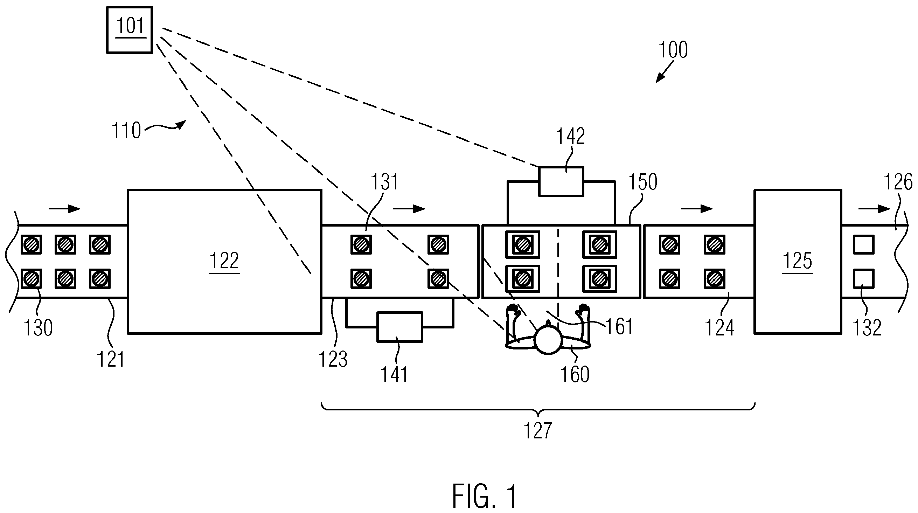

Fig. 1 zeigt schematisch einen Ausschnitt einer Behandlungsstrecke 100, in dem Produkte in der Lebensmittelindustrie transportiert und behandelt werden können. Die dargestellte Ausführungsform der Behandlungsstrecke 100 als mehrere Transporteinrichtungen und, wie im Folgenden erläutert, Behandlungsmaschinen umfassend ist nur als beispielhaft zu verstehen und ist keinesfalls zwingend. Ebenso ist die Art der Produkte, auf die im Folgenden Bezug genommen wird, nicht zwingend und es können andere Produkte, andere Kombinationen von Maschinen und andere Anzahlen von Transporteinrichtungen und Maschinen zum Einsatz kommen, ohne dass hierdurch von der Erfindung abgewichen werden müsste. Die nachstehenden Erläuterungen zur Ausgestaltung der Behandlungsstrecke als solche sind nur beispielhaft zu verstehen. Während im Folgenden insbesondere auf die Anwendung der Erfindung im Bereich der Lebensmittelindustrie eingegangen wird, können sämtliche Ausführungsformen auch an die Realisierung im Bereich der Verpackungsindustrie, insbesondere zum Verpacken von Medikamenten (wie etwa Tabletten) oder austauschbaren Bauteilen, wie etwa Druckerpatronen, angepasst werden. Der Bezug zur Lebensmittelindustrie ist für die beschriebenen Ausführungsformen daher nicht als beschränkend zu verstehen.

In der dargestellten Ausführungsform umfasst die Behandlungsstrecke 100 eine Reihe von in Transportrichtung der Produkte 130 nacheinander angeordneten Transporteinrichtungen 121, 123, sowie 124 und 126, die die Produkte (hier Verpackungen und mit Produkt bestückte Verpackungen) transportieren. Dabei können mehrere Transporteinrichtungen, die ggf. auch durch eine oder mehrere Behandlungsmaschinen 122 oder andere Einrichtungen getrennt sein können, zusammen die Transportstrecke 127 bilden, die hier schematisch als die Transporteinrichtungen 123 und 124, sowie den Wiegebereich 150 (siehe unten) umfassend dargestellt ist.

In Transportrichtung der Produkte ist zunächst eine erste Behandlungsmaschine 122 angeordnet, die als Einlegestation ausgebildet ist, in der die noch leeren Verpackungen 130 mit einem Lebensmittel befüllt werden. Hier kann es sich besonders bevorzugt um Verpackungen auf Kunststoffbasis handeln, in die Lebensmittel in Scheiben (beispielsweise Wurst oder Käse) oder in Stücken (Würfel oder andere Formen) eingelegt werden. Dazu kann die Einlegestation 122 beispielsweise eine vorgegebene Stückzahl von Scheiben, die der Einlegestation in bereits vorgeschnittenem Zustand zugeführt werden, in jede Verpackung einlegen. Das Zuschneiden der einzulegenden Scheiben kann in einer hier nicht separat dargestellten Schneidevorrichtung erfolgen.

Aus dieser Maschine 122 werden die dann mit Lebensmittel befüllten Verpackungen (Produkte) 131 der Transporteinrichtung 123 zugeführt. Hier kann ein Sensor 141 angeordnet sein, der einen für die Produkte 131 jeweils spezifischen Wert (produktspezifischen Wert) ermittelt. Dabei kann es sich um irgendeinen numerischen Wert handeln, wie beispielsweise Gewicht, Temperatur, Feuchtegehalt und ähnliches. Der Sensor kann insbesondere zum Messen von numerisch darstellbaren, produktspezifischen Werten ausgebildet sein, wie es die eben genannten Sensoren sind. Er kann aber alternativ oder zusätzlich auch ausgebildet sein, üblicherweise nicht numerisch dargestellte oder numerisch nicht darstellbare, produktspezifische Angaben (im Folgenden auch als produktspezifische Werte verwendet) zu bestimmen. Dazu zählt beispielsweise, ob das Produkt noch qualitativ einwandfrei ist oder das Auslesen einer Markierung, beispielsweise eines Strichcodes. In der Behandlungsstrecke können noch weitere Sensoren zum Messen produktspezifischer Werte vorgesehen sein, wie dies beispielsweise im Bereich 150 mit dem Sensor 142 gezeigt ist. Beim Bereich 150 handelt es sich um einen Wiegebereich, in dem die einzelnen Produkte 131 jeweils auf Wiegezellen angeordnet werden, die das Gewicht des Produktes messen können. Der Sensor 142 ist hier schematisch dargestellt, um die Wiegezellen in dem Bereich 150 zusammenzufassen. In Transportrichtung der Produkte stromabwärts des Wiegebereichs 150 kann eine weitere Maschine 125, insbesondere eine Siegeleinrichtung zum Versiegeln der Produkte angeordnet sein, in der die Produkte 132 beispielsweise durch Anbringen und Befestigen einer Kunststofffolie verschlossen werden.

Weiterhin kann eine Steuereinheit 101 (üblicherweise umfassend einen Prozessor und zugeordneten Speicher) vorgesehen sein, die mit den Sensoren zum Zweck des Datenaustausches verbunden ist und die auch ausgebildet sein kann, die Produkte anhand der von den Sensoren gemessenen, produktspezifischen Werte und beispielsweise der Kenntnis der Bewegung der Produkte innerhalb der Behandlungsstrecke 100 auf ihrem Weg durch die Behandlungsstrecke zu verfolgen.

Die Steuereinheit 101 bildet zusammen mit den Sensoren 141 und 142 und zusammen mit der noch zu beschreibenden Anzeigeeinrichtung die sogenannte Streckenverfolgung 110, welche die Produkte entlang ihres Weges durch zumindest einen Teil der Behandlungsstrecke verfolgt.

Die Verbindung von Steuereinheit/Streckenverfolgung 101 und Sensoren 141 und 142 kann drahtlos oder auch mit Hilfe von Kabeln (LAN-Kabel oder ähnliches) erfolgen und ist zumindest unidirektional, das heißt sie erlaubt einen Datenaustausch in zumindest einer Richtung nämlich von dem entsprechenden Sensor 141 oder 142 zur Steuereinheit, sodass die von den Sensoren gemessenen Werte der Steuereinheit übertragen können.

Ferner ist in der Umgebung des Wiegebereichs 150 ein Bediener 160 dargestellt, der beispielsweise abhängig von dem ermittelten Gewicht der einzelnen Produkte eine zusätzliche Portion (beispielweise eine oder mehrere Scheiben) Lebensmittel in ein Produkt hineinlegen oder eine Portion entfernen kann. Dies wird üblicherweise getan, wenn in dem Wiegebereich festgestellt wird, dass in einer bestimmten Verpackung zu viel oder zu wenig Lebensmittel, (beispielsweise Wurst oder Käse) eingelegt wurde. In diesem Fall kann dann ein Bediener händisch eine Scheibe aus der Verpackung entfernen (es können natürlich auch mehr als eine Scheibe sein) oder eine oder mehrere Scheiben hinzufügen, je nachdem ob zu wenig oder zu viel Lebensmittel in der Verpackung festgestellt wurde.

Erfindungsgemäß wird dem Bediener diese Information mit Hilfe einer Virtual-Reality-Brille (allgemeiner: Anzeigeeinrichtung) zur Verfügung gestellt, so dass der produktspezifische Wert, (hier beispielsweise das Gewicht) in dem entsprechenden Produkt zugeordneter Weise in der Virtual-Reality-Brille als Überlagerung der eigentlichen Darstellung des Produktes dargestellt wird. Der produktspezifische Wert kann der Virtual-Reality-Brille dabei über die Steuereinheit und eine entsprechende Verbindung zum Datenaustausch (kabellos oder über physische Verbindung, beispielsweise in Form eines LAN-Kabels) zur Verfügung gestellt werden.

Bevorzugt wird dem Bediener lediglich produktspezifische Information bzw. produktspezifische Werte zu solchen Produkten angezeigt, die sich im Sichtfeld 161 oder Sichtbereich des Bedieners befinden, wie dies nachstehend noch erläutert wird.

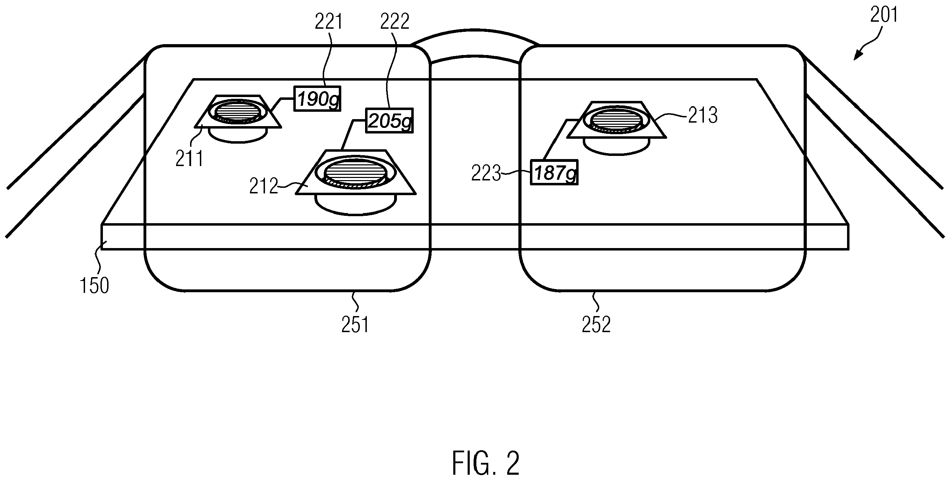

In Fig. 2 ist die Ansicht des Bedieners auf den Wiegebereich 150 und die darin angeordneten Produkte durch die Virtual-Reality-Brille 201 schematisch vereinfacht dargestellt. In der Ausführungsform gemäß Fig. 2 ist die Virtual-Reality-Brille als Datenbrille dargestellt, die in ihrem Aufbau einer gewöhnlichen Brille ähnelt, insbesondere ein oder mehrere durchsichtige Displays ("Brillengläser") 251 und 252 aufweist, durch die der Bediener seine Umgebung im Bereich seines Sichtfeldes (siehe dazu die Beschreibung in Fig. 1) wahrnimmt. In dem durch die Brillengläser 251 und 252 wahrgenommenen Sichtfeld werden erfindungsgemäß produktspezifische Werte 221 bis 223 der Darstellung der Produkte überlagert dargestellt, sofern sich ein Produkt in dem durch die Virtual-Reality-Brille wahrgenommenen Sichtfeld befindet.

In der hier dargestellten, beispielhaften Ausführungsform sind in dem Wiegebereich 150 drei Produkte 211, 212 und 223 angeordnet, deren Gewicht durch die entsprechenden Sensoren (hier Wiegezellen) gemessen wurde. Die Position der Produkte ist aufgrund ihrer Anordnung auf den Wiegezellen ebenfalls bekannt und wird beispielsweis von der Steuereinheit an die Virtual-Reality-Brille übertragen. Bevorzugt besitzt die Virtual-Reality-Brille eine Positionsbestimmungseinrichtung, um die relative Lage der Virtual-Reality-Brille und insbesondere das Sichtfeld des Bedieners relativ zu den Produkten bestimmen zu können. Alternativ oder zusätzlich kann die Virtual-Reality-Brille eine eigene Kamera oder anderen optischen Sensor umfassen, um das Sichtfeld wahrzunehmen und beispielsweise mit Hilfe von Bilderkennungsverfahren die Produkte 211 bis 213 in der Wiegeeinrichtung 150 zu erkennen. Basierend auf der Position und/oder den erkannten Produkten und basierend auf dem von der Steuereinheit 101 (siehe Fig. 1) erhaltenen, produktspezifischen Werten kann die Virtual-Reality-Brille 201 dann die produktspezifischen Werte 221 bis 223 den einzelnen Produkten 211 bis 213 zuordnen und in zugeordneter Weise darstellen, so dass der Bediener bzw. Träger der Virtual-Reality-Brille 201 unmittelbar erkennen kann, welcher produktspezifische Wert zu welchem Produkt gehört.

Dies kann beispielsweise darüber erfolgen, dass der produktspezifische Wert direkt innerhalb des vom Produkt eingenommenen Bereichs des Sichtfeldes dargestellt wird, oder, wie in Fig. 2 angegeben, über einen Pfeil oder andere Linien eine Verbindung zwischen dem angezeigten produktspezifischen Wert und dem Produkt geschaffen wird. Durch diese visuelle Darstellung der Zughörigkeit von produktspezifischem Wert und Produkt kann der Bediener unmittelbar erkennen, welcher produktspezifische Wert zu welchem Produkt gehört und basierend darauf beispielsweise im Falle der Anzeige des Gewichts als produktspezifischem Wert entscheiden, ob dem einzelnen Produkt zusätzliches Lebensmittel zugeführt oder aus diesem entfernt werden muss.

Die Darstellung des Gewichts als produktspezifischen Wert in Einheiten wie Gramm entsprechend der Fig. 2 ist nicht notwendig. Es kann auch ein produktspezifischer Wert angegeben werden, der zwar aus den von dem Sensoren gemessenen Wert abgeleitet werden kann, diesem jedoch nicht zwangsläufig gleicht oder entspricht. Beispielsweise kann anstelle des Gewichts jedes Produktes in Fig. 2 auch die Anzahl oder das Gewicht hinzuzufügenden oder zu entfernenden Lebensmittels mit Hilfe einer vorzeichenbehafteten Zahl angezeigt werden. Dies kann am Beispiel der Fig. 2 wie folgt erläutert werden. Angenommen, das gewünschte Gewicht eines Produktes (Verpackung inklusive Lebensmittel) beträgt 200g und jede Scheibe des Lebensmittels wiegt 5g. Im Falle des Produktes 211 bedeutet dies, dass hier zwei Scheiben fehlen. Anstelle der Angaben des produktspezifischen Wertes 221 mit "190g" kann dann auch die Angabe "+2" als produktspezifischer Wert 221 angezeigt werden, um so dem Bediener in einfacher Weise die Menge an zuzuführenden Scheiben (hier zwei) anzugeben. Für das Produkt 212 würde dann beispielsweise der produktspezifische Wert 222 mit "-1" angegeben.

Alternativ hierzu oder zusätzlich kann auch der Soll-Wert der Anzahl von Scheiben, Gewicht der Produkte oder ähnliches zusätzlich zum produktspezifischen Wert angegeben werden. Der produktspezifische Wert 221 könnte also ergänzt werden durch eine Angabe "200g", die dann den Sollwert des Gewichts des Produkts bestimmt. Der Bediener könnte dann solange Scheiben des Lebensmittels der Verpackung hinzufügen, bis der gemessene produktspezifische Wert dem Soll-Wert möglichst gleicht.

Für den Fall, dass nicht numerische, produktspezifische Werte oder nicht numerisch darstellbare, produktspezifische Werte durch die Virtual-Reality-Brille dargestellt werden, kann an Stelle der numerischen Werte in den produktspezifischen Werten 221 bis 223 auch eine Verwendung von Worten oder Wortgruppen oder Sätzen erfolgen. Wird beispielsweise durch einen geeigneten Sensor festgestellt, ob das Produkt (insbesondere das Lebensmittel) verdorben ist und daher aussortiert werden soll, kann als produktspezifischer Wert beispielsweise der Begriff "schlecht" oder "aussortieren" angezeigt werden, um dem Bediener zu signalisieren, dass dieses spezifische Produkt, das mit diesem produktspezifischen Wert versehen ist, zu entfernen ist.

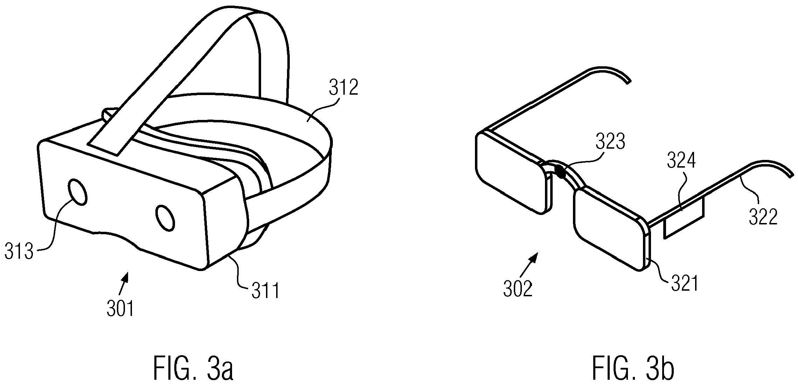

Die Fig. 3a und 3b zeigen zwei Ausführungsformen der Virtual-Reality-Brille.

In Fig. 3a ist die Virtual-Reality-Brille als "Head-Mounted Display" 301 dargestellt. Dieses Head-Mounted Display kann einen an sich undurchsichtigen Schirm 311 umfassen, auf dessen einer Seite, die dem Bediener beim Tragen des Head-Mounted Display 301 zugewandt ist, eine Anzeige in Form eines Displays angebracht ist. Auf diesem Display kann dann eine Echtzeit-Darstellung des Sichtfeldes bzw. des Sichtbereichs des Bedieners (siehe hierzu die Erläuterungen in Fig. 1) erfolgen. Dies geschieht mit Hilfe von optischen Sensoren, wie beispielsweise den beiden dargestellten Kameras 313, die an Stelle der Augen des Bedieners das Sichtfeld des Bedieners wahrnehmen und auf dem Display des Schirms darstellen. Zusätzlich kann das Head-Mounted Display einen Tragrahmen 312 oder ähnliche Einrichtung umfassen, die ein Befestigen oder Anbringen des Head-Mounted Display am Kopf des Bedieners erlaubt. Auf dem Display wird dann nicht nur das von den Kameras 313 wahrgenommene Sichtfeld dargestellt, sondern zusätzlich in überlagerter Form (in Form einer Augmented Reality oder Mixed Reality) eine Darstellung der produktspezifischen Werte derart, dass eine Zuordnung der produktspezifischen Werte zu den jeweiligen Produkten erfolgt, gezeigt.

In Fig. 3b ist eine alternative Ausführungsform der Virtual-Reality-Brille dargestellt, bei der es sich um eine Datenbrille 302 handelt. Diese Datenbrille ist in ihrer Form und ihrem Gewicht üblicherweise verwendeten Brillen ähnlich und umfasst entsprechend Bügel 322, die beispielsweise auf die Ohren eines Bedieners aufgelegt werden können, um die Datenbrille am Kopf des Bedieners zu halten. In diesen Bügeln können Einrichtungen wie beispielsweise der Prozessor der Datenbrille oder eine ihm zugeordnete Speichereinheit oder eine Stromversorgung in Form von Akkumulatoren eingebaut sein. Zusätzlich umfasst die Datenbrille 302 durchsichtige Displays 321, deren Form und Gestalt der von üblichen Brillen ähneln kann. Diese erlauben dem Bediener bevorzugt die Wahrnehmung seines Sichtfeldes mit seinen eigenen Augen, ohne dass hierfür die Darstellung mit Hilfe einer Kamera notwendig wäre, wie dies bei dem Head-Mounted Display gemäß Fig. 3a der Fall ist. Die Sicht des Bedieners durch die durchsichtigen Displays 321 hindurch wird auch als Ansicht bezeichnet. In den durchsichtigen Displays 321 können dem Bediener dann die produktspezifischen Informationen als dem Sichtfeld des Bedieners überlagert dargestellt werden, so dass ein im Sichtfeld des Bedieners liegendes Produkt mit dem zugeordneten produktspezifischen Wert angezeigt wird.

Weiterhin kann die Datenbrille 302 eine Kamera 323 oder anderen optischen Sensor umfassen, um das Sichtfeld des Bedieners wahrzunehmen und die darin sich möglicherweise befindenden Produkte mit Hilfe von Bilderkennungsprogrammen und/oder durch Rückgriff auf beispielsweise abgespeicherte Positionen der Produkte zu erkennen.

Zusätzlich oder alternativ können die in den Fig. 3a und 3b dargestellten Ausführungsformen der Datenbrille 301 Positionsbestimmungseinrichtungen 324 umfassen, die zumindest die Bestimmung der Position der Datenbrille im dreidimensionalen Raum ermöglichen und besonders bevorzugt auch eine Bestimmung des vom Bediener wahrnehmbaren Sichtfeldes gewährleisten, unabhängig von den ansonsten vorgesehenen optischen Sensoren, wie Kameras (wie die Kameras 313 und 323). Hier kommen GPS-Sensoren, Triangulationssystems und andere bekannte Einrichtungen, wie Neigungssensoren, in Frage. Dies gilt selbstverständlich auch für das Head-Mounted Display 301.

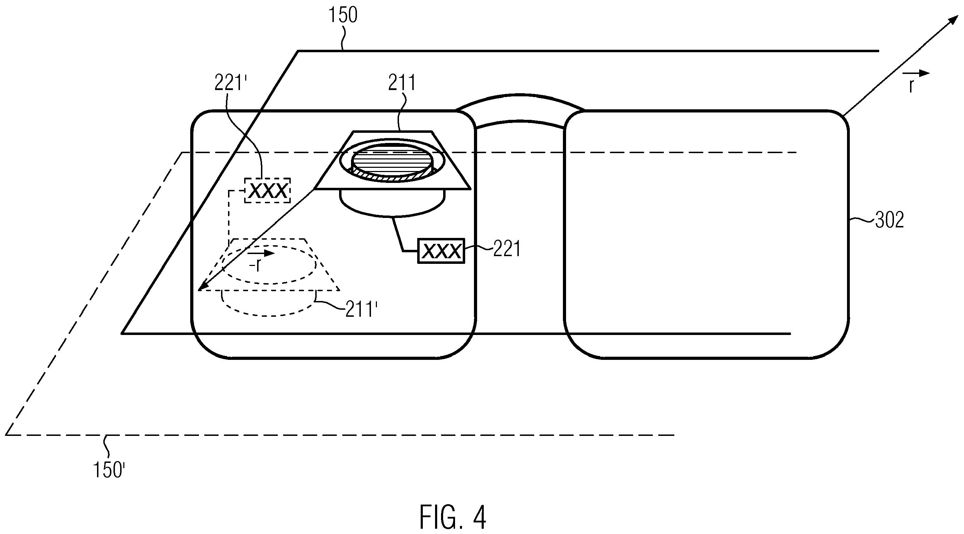

Die Kenntnis der relativen Lage von Produkt und Sichtfeld des Bedieners, insbesondere die relative Lage des Produkts im Sichtfeld des Bedieners, erlaubt gezielt das Mitführen eines produktspezifischen Wertes mit einem sich im Sichtfeld des Bedieners bewegenden Produktes. Dazu zeigt Fig. 4 schematisch den Fall, das der Bediener seinen Kopf in Richtung r bewegt.

In der Ausgangssituation (mit durchgehenden Linien dargestellt) befindet sich die Virtual-Reality-Brille in der Position 302 und im Sichtfeld des Bedieners durch die Virtual-Reality-Brille ist das Produkt 211 im Wiegebereich (nur beispielhaft) 150 gezeigt. Dem ist ein produktspezifischer Wert 221 zugeordnet dargestellt (beispielsweise Gewicht oder ähnliches). Die "zugeordnete" Darstellung des produktspezifischen Wertes zum Produkt kann beispielsweise so erfolgen, dass der Bediener diese in einem gewissen Abstand zueinander wahrnimmt, beispielsweise in einem wahrgenommenen Abstand von wenigen Zentimetern.

Bewegt der Bediener nun seinen Kopf in die mit dem Pfeil dargestellte Richtung r, so ist dies gleichbedeutend mit einer Verschiebung des Produktes 211 und des Wiegebereichs 150 in die gestrichen dargestellten Positionen 211' und 150'. Das Produkt in seiner neuen Position 211' ist dann immer noch im Sichtfeld des Bedieners und daher wird ihm in der Virtual-Reality-Brille immer noch der produktspezifische Wert an der Stelle 221 dargestellt. Dabei ist es besonders bevorzugt, wenn auch bei geringfügigem Herausbewegen eines Teils des Produktes aus dem durch die Virtual-Reality-Brille wahrgenommenen Sichtfeld eine Darstellung des produktspezifischen Wertes erfolgt.

Insbesondere kann bei Bewegung der Virtual-Reality-Brille relativ zum Produkt die Form der Zuordnung des produktspezifischen Wertes zum Produkt gleich bleiben, zum Beispiel indem der vom Bediener wahrgenommene Abstand zwischen Produkt und produktspezifischem Wert unverändert bleibt, obwohl die Anordnung des produktspezifischen Wertes relativ zum Produkt verändert wird. So wird beispielsweise in der Fig. 4 in der Ausgangssituation der produktspezifische Wert 221 unterhalb des Produktes 211 dargestellt, während er in der gestrichelt dargestellten Position des Produkts 211' oberhalb des Produkt dargestellt wird. Eine Veränderung der relativen Lage von produktspezifischem Wert zu Produkt, kann beispielsweise dann sinnvoll sein, wenn das Produkt sich aus dem Bereich der Displays der Virtual-Reality-Brille entfernt.

Befindet sich das Produkt beispielsweise bereits am unteren Rand des Displays der Virtual-Reality-Brille, so ist eine Darstellung des produktspezifischen Wertes "unterhalb" des Produktes nicht mehr möglich und die Prozessoreinheit der Virtual-Reality-Brille oder eine andere Steuereinheit kann die Darstellung des produktspezifischen Wertes ändern, so dass der produktspezifische Wert oberhalb des Produktes angezeigt wird. Ferner kann vorgesehen sein, dass, sobald ein Produkt sich nicht mehr im Sichtfeld des Bedieners befindet, der entsprechende produktspezifische Wert auch nicht mehr angezeigt wird. Eine Verwirrung des Bedieners durch angezeigte produktspezifische Werte für vom Bediener nicht sichtbare Produkte kann so vermieden werden.

Zusätzlich oder alternativ zu der Darstellung produktspezifischer Werte können auch andere visuelle Effekte einem Produkt zugeordnet dargestellt werden, um beispielsweise eine erforderliche Interaktion des Bedieners mit dem Produkt zu signalisieren. Am Beispiel des zu leichten Produktes (siehe hierzu Fig. 2) kann etwa vorgesehen sein, dass nach Zugabe oder Wegnahme weiterer Scheiben Lebensmittel in die Verpackung und bei Erreichen des gewünschten Soll-Gewichts eine visuelle Bestätigung, beispielsweise grünes Blinken des produktspezifischen Wertes oder Grünfärbung des Produktes erfolgt, um dem Bediener zu signalisieren, dass dieser kein weiteres Lebensmittel in das Produkt eingeben oder aus diesem entfernen muss. Alternativ kann beispielsweise bei Produkten, die als verdorben festgestellt wurden, das Produkt mit einer roten Färbung überlagert werden, um dem Bediener zu signalisieren, dass er dieses Produkt entfernen soll. Auch andere Ausführungsformen sind hier denkbar. Wird als produktspezifischer Wert beispielsweise eine Identifikation der Charge in Form einer Chargen-ID oder ein Zeitstempel bereitgestellt, können diese ebenfalls dem Produkt zugeordnet dargestellt werden.

Besonders bevorzugt ist die Darstellung produktspezifischer Werte in beliebiger Entfernung zu dem entsprechenden Produkt immer noch möglich, sofern sich das Produkt im Sichtbereich des Bedieners befindet. Am Beispiel der Wiegezelle gemäß Fig. 2, aber auch gemäß der Fig. 4 befindet sich der Bediener üblicherweise in unmittelbarer Nähe des Produktes und ist von diesem meist nicht weiter als einen Meter entfernt. In diesem Fall ist auch die Anzahl der sich im Sichtbereich des Bedieners befindenden Produkte relativ gering, so dass die angegebene Darstellung der den Produkten zugeordneten, produktspezifischen Werte im Wiegebereich für jedes Produkt möglich ist, ohne die Übersichtlichkeit im Sichtfeld des Bedieners zu beeinträchtigen.

Befindet sich der Bediener jedoch in einiger Entfernung der Behandlungsstrecke, so können in seinem Sichtbereich viele hundert Produkte vorhanden sein, zu denen prinzipiell produktspezifische Werte zur Verfügung stehen, die in der Virtual-Reality-Brille angezeigt werden können. Dies kann jedoch zu einer Flut von produktspezifischen Werten führen, die die Sicht auf die Produkte verhindern kann.

In diesem Fall kann vorgesehen sein, dass die Anzahl und/oder die Größe und/oder die Art der angezeigten produktspezifischen Werte abhängig vom Abstand des Bedieners zum jeweiligen Produkt oder abhängig von der Anzahl der Produkte im Sichtfeld des Bedieners ist. Befindet sich der Bediener beispielsweise in einer Entfernung von mehreren Metern zu den in seinem Sichtfeld befindlichen Produkten, kann auf die Darstellung von Eigenschaften, wie dem Gewicht der Produkte verzichtet werden, da der Bediener ohnehin kaum in der Lage sein wird, in dieser Entfernung beispielsweise Scheiben aus dem Produkt zu entfernen oder diesem zuzuführen. Jedoch kann auch in dieser Entfernung immer noch eine Anzeige erfolgen, falls ein Produkt verdorben ist, um den Bediener dazu zu bewegen, dieses in jedem Fall aus der Behandlungsstrecke zu entfernen.

## Patentansprüche

1. Streckenverfolgung (110) zum Verfolgen und/oder Überwachen einer Vielzahl von durch eine Behandlungsstrecke (100) transportierter Produkte (130, 131, 132) in der Lebensmittelindustrie oder der Verpackungsindustrie, mit wenigstens einem Sensor (141, 142) zum Messen eines produktspezifischen Wertes für jedes Produkt (130, 131, 132) und einer Anzeigeeinrichtung (201), die den produktspezifischen Wert des Produktes (130, 131, 132) in dem Produkt zugeordneter Weise anzeigen kann, **dadurch gekennzeichnet, dass** die Anzeigeeinrichtung (201) eine Virtual-Reality Brille (201) ist, die ausgebildet ist, den produktspezifischen Wert einer Ansicht oder einer Darstellung der Produkte überlagert darzustellen.

2. Streckenverfolgung (110) nach Anspruch 1, wobei die Virtual-Reality Brille (201) als Head-Mounted Display (301) oder als Datenbrille (302) ausgebildet ist.

3. Streckenverfolgung (110) nach Anspruch 1 oder 2, wobei der Sensor (141, 142) eine Wiegezelle zum Wiegen eines Produktes und/oder einen Detektor zum Detektieren einer Markierung, wie einen Zeitstempel oder eine Chargen-Identifikation, und/oder einen Detektor zum Erkennen eines auszusortierenden Produktes umfasst.

4. Streckenverfolgung (110) nach einem der Ansprüche 1 bis 3, wobei die Streckenverfolgung (110) ausgebildet ist, den produktspezifischen Wert für ein Produkt (130, 131, 132) anzuzeigen, falls das Produkt sich im Sichtfeld (161) eines die Virtual-Reality Brille (201) tragenden Bedieners (160) befindet.

5. Streckenverfolgung (110) nach einem der Ansprüche 1 bis 4, wobei die Streckenverfolgung ausgebildet ist, den produktspezifischen Wert mit dem Produkt (130, 131, 132) mitbewegt darzustellen, falls sich das Produkt relativ zur Virtual-Reality Brille (201) bewegt.

6. Streckenverfolgung (110) nach einem der Ansprüche 1 bis 5, wobei die Streckenverfolgung eine Steuereinheit (101) umfasst, die mit dem wenigstens einen Sensor (141, 142) und der Virtual-Reality Brille zum Datenaustausch verbunden ist und von dem Sensor gemessene, produktspezifische Werte empfangen und an die Virtual-Reality Brille (201) zur Darstellung übermitteln kann.

7. Streckenverfolgung (110) nach einem der Ansprüche 1 bis 6, wobei die Virtual-Reality Brille (201) mit einer Positionsbestimmungseinrichtung (324) zum Bestimmen der Position und/oder der Blickrichtung der Virtual-Reality Brille (201) relativ zu wenigstens einem Produkt verbunden ist oder diese umfasst.

8. Verfahren zum Verfolgen und/oder Überwachen einer Vielzahl von durch eine Behandlungsstrecke (100) transportierter Produkte (130, 131, 132) in der Lebensmittelindustrie oder der Verpackungsindustrie mit Hilfe einer Streckenverfolgung (110) umfassend wenigstens einen Sensor (141, 142), der einen produktspezifischen Wert für jedes Produkt, das in der Behandlungsstrecke transportiert und/oder behandelt wird, misst, und eine Anzeigeeinrichtung (201), die den produktspezifischen Wert des Produktes in dem Produkt zugeordneter Weise anzeigt, **dadurch gekennzeichnet, dass** die Anzeigeeinrichtung (201) eine Virtual-Reality Brille (201) ist, die den produktspezifischen Wert einer Ansicht oder einer Darstellung der Produkte (130, 131, 132) überlagert darstellt, beispielsweise in Form einer Augmented Reality oder Mixed Reality.

9. Verfahren nach Anspruch 8, wobei die Virtual-Reality Brille (201) als Head-Mounted Display (301) ausgebildet ist, das eine Kamera (313) zum Aufnehmen des Sichtfeldes (161), das der Bediener (160), der das Head-Mounted Display (301) trägt, ohne das Head-Mounted Display wahrnehmen würde, umfasst, und das aufgenommene Sichtfeld in Echtzeit darstellt, wobei dem aufgenommenen Sichtfeld der produktspezifische Wert wenigstens eines sich im Sichtfeld befindenden Produktes (130, 131, 132) zugeordnet und überlagert dargestellt wird.

10. Verfahren nach Anspruch 8, wobei die Virtual-Reality Brille (201) als Datenbrille (302) mit durchsichtigem Display ausgebildet ist und ein die Datenbrille (302) tragender Bediener (160) durch die Datenbrille hindurch ein Sichtfeld (161) wahrnimmt, wobei der produktspezifische Wert wenigstens eines sich im Sichtfeld befindenden Produktes (130, 131, 132) dem Produkt zugeordnet und dem Sichtfeld überlagert im durchsichtigen Display dargestellt wird.

11. Verfahren nach einem der Ansprüche 8 bis 10, wobei die Streckenverfolgung (110) die Darstellung der Virtual-Reality Brille (201) so steuert, dass ein dargestellter, produktspezifischer Wert des Produktes (130, 131, 132) mit dem sich relativ zur Virtual-Reality Brille bewegten Produkt mitbewegt dargestellt wird.

12. Verfahren nach einem der Ansprüche 8 bis 11, wobei die Streckenverfolgung (110) eine Steuereinheit umfasst, die mit dem wenigstens einen Sensor (141, 142) und der Virtual-Reality Brille (201) zum Datenaustausch verbunden ist und die von dem wenigstens einen Sensor (141, 142) gemessenen, produktspezifischen Werte empfängt und nur die von dem wenigstens einen Sensor empfangenen, produktspezifischen Werte an die Virtual-Reality Brille (201) zur Darstellung übermittelt.

13. Verfahren nach einem der Ansprüche 8 bis 12, wobei der Sensor eine Wiegezelle (142) zum Wiegen eines Produktes (130, 131, 132) umfasst und der produktspezifische Wert ein für das Gewicht des Produktes charakteristischer Wert ist; und/oder wobei der Sensor (141) einen Detektor zum Detektieren einer Markierung, wie einen Zeitstempel oder eine Chargen-Identifikation umfasst und der produktspezifische Wert die detektierte Markierung ist; und/oder wobei der Sensor einen Detektor zum Erkennen eines auszusortierenden Produktes (130, 131, 132) umfasst und der produktspezifische Wert eine visuelle Angabe darüber ist, dass das Produkt aussortiert werden soll oder dass das Produkt nicht aussortiert werden soll.

14. Transportstrecke (127) zum Transportieren von Produkten (130, 131, 132), wobei die Transportstrecke (127) wenigstens eine Transporteinrichtung (121, 123, 124, 126) zum Transportieren von Produkten (130, 131, 132) und eine Streckenverfolgung (110) gemäß einem der Ansprüche 1 bis 7 umfasst.
